# EUROPÄISCHE PATENTSCHRIFT

(11) **EP 2 829 695 B1**
(45) Veröffentlichungstag und Bekanntmachung des Hinweises auf die Patenterteilung: **15.11.2017**
(21) Anmeldenummer: 14173882.3
(22) Anmeldetag: 25.06.2014
(51) Int. Cl.: F01L 1/047

(54) **Wälzgelagerte Welle**
Roller-bearing-mounted shaft
Arbre monté sur roulement

(30) Priorität: 26.07.2013 DE 102013214680
(43) Veröffentlichungstag der Anmeldung: 28.01.2015
(73) Patentinhaber: Mahle International GmbH, 70376 Stuttgart (DE)
(72) Erfinder: Flender, Thomas, 71735 Eberdingen (DE); Kreisig, Michael, 70197 Stuttgart (DE); Menonna, Antonio, 71254 Ditzingen (DE); Schneider, Falk, 70825 Korntal-Münchingen (DE); Steichele, Stefan, 70839 Gerlingen (DE)
(74) Vertreter: BRP Renaud & Partner mbB Rechtsanwälte Patentanwälte Steuerberater

(56) Entgegenhaltungen:
- EP-A1- 1 262 671
- DE-A1-102010 012 505
- GB-A- 2 345 490
- US-A- 6 153 030

## Beschreibung

Die vorliegende Erfindung betrifft eine wälzgelagerte Welle mit einem Wellenrohr mit einer Wellenaußenfläche, die bereichsweise als Wälzkörperlauffläche ausgebildet ist, gemäß dem Oberbegriff des Anspruchs 1. Die Erfindung betrifft außerdem eine Brennkraftmaschine mit einer solchen als Nockenwelle ausgebildeten und wälzgelagerten Welle.

Für gebaute Nockenwellen wurden bisher üblicherweise geschweißte und gezogene Rohre verwendet, die über eine entsprechende Gleitlagerung in der Brennkraftmaschine gelagert wurden. Die Verwendung von geschweißten und anschließend gezogenen Rohren war bei wälzgelagerten und gebauten Nockenwellen hingegen bisher nicht möglich, da die Wälzkörper des Wälzlagers direkt auf einer Wellenaußenfläche liefen und bisher die nötigen Oberflächenhärtewerte bzw. Verschleißbeständigkeit nur mit nahtlos gezogenen Rohren höheren Kohlenstoffgehaltes erzielt werden konnten. Hierbei musste die Wellenaußenfläche, die die Wälzkörperlauffläche bildete, gehärtet werden, wofür ein Kohlenstoffgehalt des Materials des Wellenrohrs von größer als 0,45 Masse% unbedingt erforderlich war. Rohre mit einem solch hohen Kohlenstoffgehalt waren jedoch nicht schweißbar.

Aus der DE 102010012505 A1 ist eine Hohlwelle, insbesondere eine gebaute Nockenwelle für eine Brennkraftmaschine, mit einem Wellenrohr aus Stahl bekannt.

Die vorliegende Erfindung beschäftigt sich daher mit dem Problem, für eine wälzgelagerte Welle der gattungsgemäßen Art eine verbesserte Ausführungsform anzugeben, die insbesondere eine wirtschaftliche und zugleich qualitativ hochwertige Herstellung der Welle ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, für eine wälzgelagerte Welle mit einem Wellenrohr nunmehr ein geschweißtes und anschließend gezogenes Wellenrohr zu verwenden, welches zugleich einen Kohlenstoffanteil von größer als 0,45 Masse -% besitzt. Diese Angabe bezieht sich selbstverständlich auf das Material des Wellenrohrs. Durch ein neuartiges Fertigungsverfahren ist es nunmehr möglich, solche geschweißten und gezogenen Rohre mit hohem Kohlenstoffgehalt herzustellen und, beispielsweise für Nockenwellen, zu verwenden. Dabei wird ein spezielles Hochfrequenz-Induktionsschweißverfahren eingesetzt das diesen Schweißprozess ermöglicht. Im Vergleich zu bisher nahtlos gezogenen Rohren bietet das erfindungsgemäß geschweißte und anschließend gezogene Rohr mit einem zugleich vergleichsweise hohen Kohlenstoffanteil die Möglichkeit einer äußerst wirtschaftlichen und damit kostengünstigen Fertigung. Zugleich kann auch die Qualität gesteigert werden, da die erzielbaren Durchmessertoleranzen am Innenund Außendurchmesser reduziert werden können. Hierdurch ergibt sich beispielsweise die Möglichkeit, einen Stopfen ohne zusätzliche Bearbeitung des Innendurchmessers der Welle mit dieser zu fügen. Zugleich ist auch eine bessere Konzentrizität des Innen- zum Außendurchmessers darstellbar, wodurch weniger Rundlauffehler der gefügten Stopfen und somit weniger Aufmaß für eine nachfolgende Bearbeitung erforderlich sind. Auch können hierdurch die zur Führung notwendigen Fasen am Innendurchmesser kleiner ausgebildet werden. Von besonderem Vorteil ist darüber hinaus, dass durch die Umformung bei Raumtemperatur (Ziehprozess) eine geringere Randentkohlung stattfindet und ein geringeres Schleifaufmaß des Außendurchmessers erforderlich ist. Aufgrund des geringeren Schleifaufmaßes ist auch eine geringere Einhärtetiefe erforderlich. Die geringere Randentkohlung des geschweißten Rohres führt zu höherer Oberflächenhärte.

Bei einer vorteilhaften Weiterbildung der erfindungsgemäßen Lösung weist das Wellenrohr einen Phosphorgehalt von kleiner als 0,025 Vol.-% auf. Ebenso begrenzt wird bei dem erfindungsgemäßen Wellenrohr ein Schwefelanteil auf kleiner als 0,025 Vol.-%. Die Begrenzung sowohl des Schwefelgehalts als auch des Phosphorgehalts führt dabei zu einer Erhöhung der Schwingfestigkeit bzw. ertragbaren Hertz'schen Pressung.

Bei einer weiteren vorteilhaften Ausführungsform der erfindungsgemäßen Lösung sind zumindest die Bereiche der Wälzkörperlaufflächen randschichtgehärtet, insbesondere induktionsgehärtet. Besonders das Induktionshärten ermöglicht es, partielle Bereiche, d.h. eng begrenzte Flächen an der Wellenaußenfläche des Wellenrohrs auf die erforderliche Härtetemperatur zu erhitzen und sie anschließend abzuschrecken. Ferner wird nicht der gesamte Querschnitt gehärtet (Randschichthärtung), so dass die Zähigkeit des Nockenwellenrohres erhalten bleibt. Kann die Wärme schnell genug in den Rest des noch kalten Werkstücks, d.h. in den Rest der noch kalten Welle abfließen, so kann auf ein Abschrecken rein theoretisch sogar verzichtet werden. Mit dem partiellen Härten, welches beispielsweise auch mittels Laserstrahlhärten durchgeführt werden kann, ist somit ein qualitativ hochwertiges und zugleich kostengünstiges Härten der Welle möglich. Die Eindringtiefe beim Induktionshärten hängt dabei von der Frequenz der Wechselspannung ab. Je hochfrequenter die Spannung ist, umso geringer sind auch die Eindringtiefe und somit auch die Einhärtetiefe. Der Grad der Erwärmung kann über die Stromstärke und über die Dauer der Stromzufuhr beeinflusst werden. Um jedoch die Taktzeiten möglichst gering zu halten und auch vor dem Hintergrund, das Werkstück nicht durch zu härten, ist die Dauer der Stromzufuhr vergleichsweise kurz.

Bei einer vorteilhaften Weiterbildung der erfindungsgemäßen Lösung ist eine Wandstärke des Wellenrohrs zwischen 2 und 4 mm, insbesondere kleiner 3 mm vorzusehen. Geringere Wandstärken erlauben besonders leichte Nockenwellenkonstruktionen.

Zweckmäßig ist die Welle als Nockenwelle oder als Nockenwelle mit einer verstellbaren Innenwelle oder als Ausgleichswelle ausgebildet. Im ersten Fall können die thermisch darauf gefügten Funktionselemente beispielsweise als Nocken, Lagerringe, Positionierhilfen oder Zahnräder ausgebildet sein, wogegen sie im zweiten Fall üblicherweise als Ausgleichsgewichte ausgebildet sind. Besonders die Verwendung der erfindungsgemäßen wälzgelagerten Welle als Nockenwelle bietet den großen Vorteil, diese einerseits kostengünstig, andererseits jedoch qualitativ äußerst hochwertig herstellen zu können.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

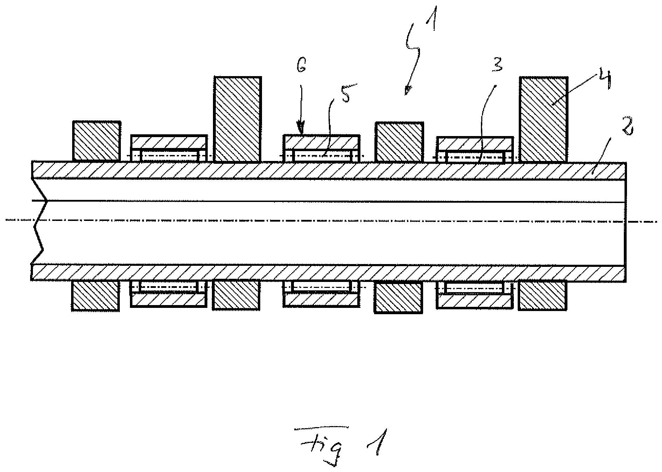

Die einzige Fig. 1 zeigt eine Schnittdarstellung durch eine erfindungsgemäße, wälzgelagerte und als Nockenwelle ausgebildete Welle.

Entsprechend der Fig. 1 weist eine erfindungsgemäße wälzgelagerte Welle 1 ein Wellenrohr 2 mit einer Wellenaußenfläche auf, die bereichsweise als Wälzkörperlauffläche 3 ausgebildet ist. Im vorliegenden Fall ist die Welle 1 als Nockenwelle ausgebildet und besitzt mehrere thermisch darauf gefügte Nocken 4. Anstelle der Nocken 4 können selbstverständlich auch andere Funktionselemente, wie beispielsweise Lager, Positionierhilfen oder Zahnräder thermisch auf dem Wellenrohr 2 gefügt sein. Ist die Welle 1 beispielsweise als Ausgleichswelle ausgebildet, so sind darauf als Ausgleichsgewichte ausgebildete Funktionselemente angeordnet. Erfindungsgemäß ist nun das Wellenrohr 2 als geschweißtes und anschließend gezogenes Rohr ausgebildet und weist zudem einen Kohlenstoffanteil von > 0,45 Masse-% auf. Hierdurch ist es möglich, das Wellenrohr 2 an seiner Außenfläche, d.h. im Bereich der Wälzkörperlaufflächen 3, zu härten, insbesondere induktionszuhärten, und dadurch ein direktes verschleißfreies Abrollen von Wälzkörpern 5 auf der Wälzkörperlauffläche 3 des Wellenrohrs 2 überhaupt erst zu ermöglichen. Für diese Anwendung ist ein Kohlenstoffgehalt von > 0,45 Masse-% erforderlich, wobei derartige Rohre bisher als nicht schweißbar galten. Durch ein neues Fertigungsverfahren ist es nun aber möglich, auch geschweißte und gezogene Rohre mit einem Kohlenstoffgehalt von über 0,45 Masse-% herzustellen und beispielsweise für die Verwendung als Nockenwelle einzusetzen. Hierzu wird ein Hochfrequenz Induktionsschweißverfahren eingesetzt.

Die erfindungsgemäße Welle 1 bietet dabei im Vergleich zu herkömmlichen Wellen mit nahtlos gezogenem Wellenrohr den großen Vorteil einer wirtschaftlichen und damit kostengünstigen Fertigung. Darüber hinaus sind auch bessere Durchmessertoleranzen sowohl am Außendurchmesser als auch am Innendurchmesser des Wellenrohrs 2 darstellbar. Durch die deutlich reduzierten Fertigungstoleranzen ist es zudem möglich, einen Stopfen ohne zusätzliche Bearbeitung des Innendurchmessers des Wellenrohrs 2 in diesem zu fügen. Darüber hinaus ist auch eine bessere Konzentrizität des Innen- zum Außendurchmesser des Wellenrohrs 2 darstellbar, woraus sich weniger Rundlauffehler des gefügten Stopfens ergeben. Durch die reduzierten Toleranzen und die verringerte Randentkohlung kann auch ein Aufmaß für eine nachfolgende Bearbeitung reduziert werden, insbesondere ein sogenanntes Schleifaufmaß. Auch können als Führung notwendige Fasen am Innendurchmesser des Wellenrohrs 2 kleiner ausgeführt werden.

Generell weist das Wellenrohr 2 einen Phosphorgehalt sowie einen Schwefelgehalt von < 0,025 Masse-% auf. Derartig geringe Phosphor- bzw. Schwefelgehalte erhöhen die Schwingfestigkeit bzw. ertragbaren Hertz'sche Pressungen des Wellenrohres.

Zumindest die Bereiche der Wälzkörperlaufflächen 3 sind - wie oben erwähnt - randschichtgehärtet, beispielsweise induktionsgehärtet und weisen eine Oberflächenhärte von > 58 HRC auf. Durch das Härten der Wälzkörperlaufflächen 3 ist ein direktes verschleißfreies Abrollen der Wälzkörper 5, Wälzlagern 6 auf der Wellenaußenfläche möglich, wodurch die Wälzlager 6 an sich einfach gehalten werden können. Eine Wandstärke des Wellenrohrs 2 liegt dabei zwischen 2 und 4 mm.

Selbstverständlich kann die Welle 1, insbesondere sofern sie als Nockenwelle ausgebildet ist, ähnlich wie bei einer Ausbildung als Ausgleichswelle in einem Modul gefügt werden, wobei selbstverständlich auch vorstellbar ist, dass die Nockenwelle feste Nocken 4 aufweist sowie eine innen liegende Innenwelle, die mit auf der Außenwelle, d.h. im vorliegenden Fall auf dem Wellenrohr 2 drehbar gelagerten Nocken, verbunden ist.

## Patentansprüche

1. Wälzgelagerte Welle (1) mit einem Wellenrohr (2) mit einer Wellenaußenfläche, die bereichsweise als Wälzkörperlauffläche (3) ausgebildet ist, und zumindest einem thermisch darauf gefügten Funktionselement,
**dadurch gekennzeichnet,**
**dass** das Wellenrohr (2) als geschweißtes und anschließend gezogenes Rohr ausgebildet ist und einen Kohlenstoffanteil von > 0,45 Masse-% aufweist, und
**dass** das Wellenrohr (2) mittels Hochfrequenz Induktionsschweißen hergestellt ist.

2. Welle nach Anspruch 1,
**dadurch gekennzeichnet,**
**dass** das Wellenrohr (2) einen Phosphorgehalt von < 0,025 Masse-% aufweist.

3. Welle nach Anspruch 1 oder 2,
**dadurch gekennzeichnet,**
**dass** das Wellenrohr (2) einen Schwefelgehalt von < 0,025 Masse-% aufweist.

4. Welle nach einem der Ansprüche 1 bis 3,
**dadurch gekennzeichnet,**
**dass** zumindest die Bereiche der Wälzkörperlaufflächen (3) gehärtet, insbesondere induktionsgehärtet, sind.

5. Welle nach Anspruch 4,
**dadurch gekennzeichnet,**
**dass** die gehärteten Wälzkörperlaufflächen (3) eine Oberflächenhärte von > 58 HRC aufweisen.

6. Welle nach einem der vorhergehenden Ansprüche,
**dadurch gekennzeichnet,**
**dass** eine Wandstärke des Wellenrohrs (2) zwischen 2 und 4 mm insbesondere kleiner 3 mm liegt.

7. Welle nach einem der Ansprüche 1 bis 6,
**dadurch gekennzeichnet,**
**dass** die Welle (1) als Nockenwelle, insbesondere als Außenwelle einer verstellbaren Nockenwelle, oder als Ausgleichswelle ausgebildet ist.

8. Welle nach einem der Ansprüche 1 bis 7,
**dadurch gekennzeichnet,**
**dass** die Funktionselemente als Nocken (4), Lagerringe, Positionierhilfen, Zahnräder oder als Ausgleichsgewichte ausgebildet sind.

9. Brennkraftmaschine mit einer als Nockenwelle ausgebildeten Welle (1) nach einem der Ansprüche 1 bis 8, wobei die Welle über Wälzlager (6) gelagert ist, deren Wälzkörper (5) direkt auf der Wellenaußenfläche der Welle (1) abrollen.

## Claims

1. Bearing-mounted shaft (1) with a shaft tube (2) having a shaft outer face which is partly configured as a rolling body running face (3), and at least one functional element joined thermally thereto,
**characterised in that**
the shaft tube (2) is formed as a welded and subsequently drawn tube and has a carbon content of greater than 0.45% by mass, and
the shaft tube (2) is formed via high-frequency induction welding.

2. Shaft according to claim 1,
**characterised in that**
the shaft tube (2) has a phosphorus content of less than 0.025% by mass.

3. Shaft according to claim 1 or 2,
**characterised in that**
the shaft tube (2) has a sulphur content of less than 0.025% by mass.

4. Shaft according to any of claims 1 to 3,
**characterised in that**
at least the areas of the rolling body running faces (3) are hardened, in particular induction hardened.

5. Shaft according to claim 4,
**characterised in that**
the hardened rolling body running faces (3) have a surface hardness of greater than 58 HRC.

6. Shaft according to any of the preceding claims,
**characterised in that**
a wall thickness of the shaft tube (2) is between 2 mm and 4 mm, in particular is less than 3 mm.

7. Shaft according to any of claims 1 to 6,
**characterised in that**
the shaft (1) is a camshaft, in particular an outer shaft of an adjustable camshaft, or a balance shaft.

8. Shaft according to any of claims 1 to 7,
**characterised in that**
the functional elements are cams (4), bearing rings, positioning aids, gearwheels or balancing weights.

9. Internal combustion engine with a shaft (1) which is configured as a camshaft according to any of claims 1 to 8, wherein the shaft is mounted via roller bearings (6), the roller bearings having rolling bodies (5) which roll directly on the shaft outer face of the shaft (1).

## Revendications

1. Arbre (1) monté sur roulement avec un tube d'arbre (2) avec une surface extérieure d'arbre, qui est conçue par endroits comme surface de roulement de corps de roulement (3), et avec au moins un élément fonctionnel assemblé thermiquement dessus,
**caractérisé en ce que** le tube d'arbre (2) est conçu comme un tube soudé puis étiré et présente une part de carbone de > 0,45 % en masse
et **en ce que** le tube d'arbre (2) est fabriqué au moyen d'un soudage par induction à hautes fréquences.

2. Arbre selon la revendication 1, **caractérisé en ce que** le tube d'arbre (2) a une teneur en phosphore de < 0,025 % en masse.

3. Arbre selon la revendication 1 ou 2, **caractérisé en ce que** le tube d'arbre (2) a une teneur en soufre de < 0,025 % en masse.

4. Arbre selon l'une des revendications 1 à 3, **caractérisé en ce qu'**au moins les zones des surfaces de roulement de corps de roulement (3) sont trempées, en particulier trempées par induction.

5. Arbre selon la revendication 4, **caractérisé en ce que** les surfaces de roulement de corps de roulement (3) trempées présentent une dureté de surface de > 58 HRC.

6. Arbre selon l'une des revendications précédentes, **caractérisé en ce qu'**une épaisseur de paroi du tube d'arbre (2) est comprise entre 2 et 4 mm et est en particulier inférieure à 3 mm.

7. Arbre selon l'une des revendications 1 à 6, **caractérisé en ce que** l'arbre (1) est conçu comme un arbre à cames, en particulier comme un arbre extérieur d'un arbre à cames réglable, ou comme un arbre d'équilibrage.

8. Arbre selon l'une des revendications 1 à 7, **caractérisé en ce que** les éléments fonctionnels sont conçus comme des cames (4), des bagues de roulement, des accessoires de positionnement, des roues dentées ou des poids d'équilibrage.

9. Moteur à combustion interne avec un arbre (1), conçu comme un arbre à cames, selon l'une des revendications 1 à 8, dans lequel l'arbre est monté par l'intermédiaire de paliers à roulement (6) dont les corps de roulement (5) roulent directement sur la surface extérieure d'arbre de l'arbre (1).
